# EUROPEAN PATENT APPLICATION

(11) **EP 3 048 085 A1**
(43) Date of publication of application: **27.07.2016**
(21) Application number: 15386029.1
(22) Date of filing: 24.11.2015
(51) Int. Cl.: C02F 1/00, C02F 1/44, C02F 1/28, C02F 1/32, C02F 103/02, G10L 15/00

(54) **REVERSE-OSMOSIS VOICE OPERATED BYPASS SYSTEM**

(30) Priority: 26.01.2015 GR 20150100028
(71) Applicant: Idor Hellas-Filtra Nerou Etairia Periorismenis Ethinis with d.t. "Idor Hellas Filtra Nerou EPE", 17778 Tavros (GR)
(72) Inventor: PAPADOPOULOS, Christos, 11855 Votanikos (GR)

(57) **Abstract**

The present invention relates to a mixing/stirring system for reverse-osmosis filters, which allows precise selection of the organic particles in the water consumed by the user. An operation unit (11) adjusts by means of an electromagnetic bypass valve (9), measuring the particles by an input sensor (1) at the supply and an output sensor (24), so that a quantity of water passes through the reverse-osmosis membrane (7) and another quantity reaches directly the pure-water tank (10), being mixed. The board (17) of the system may be adjusted by the user by voice commands.

## Description

### FIELD OF THE INVENTION

The invention relates to water treatment methods and in particular to a reverse-osmosis filter equipped with a mixing/stirring system.

### BACKGROUND OF THE INVENTION

The mixing/stirring system disclosed by the present invention for use in reverse-osmosis filters has not been disclosed in the state of the art.

Reverse osmosis is the passage of solvent molecules from the solvent in a solution or a solution of a lower solute concentration to a solution of a higher solute concentration through a semi-permeable membrane. A semi-permeable membrane is a membrane which allows solvent molecules to pass through its pores, but does not allow passage of solute molecules. Reverse osmosis was developed by the end of 1950s. as a cost-effective method for desalting sea water.

Reverse osmosis is employed in desalting sea water to address the problem of water scarcity. The osmotic pressure of water in oceans is 27 atmospheres. If a sufficiently high external pressure is applied, reaching 70 atmospheres, osmosis may be stopped and reversed, so that pure water passes through the membrane. Semi-permeable membranes are usually manufactured by cellulose acetate or polyamides in the form of microscopic perforated fibers. The sea water supply is input under pressure in the fibers and output as desalted water. The largest desalting plant worldwide is located in Saudi Arabia where 50% of the tap water is produced by the reverse-osmosis method. In the recent years, the method has been applied in many USA cities, for example in Santa Barbara, wherein since 1992 a reverse-osmosis plant operates producing 30400 m³ of tap water per day. The reverse-osmosis method is ideal for the removal of various undesirable particles, pathogens, pollutants as well as particles such as chlorine, nitrate, arsenic, cadmium, mercury, lead and zinc.

Respective low-productivity devices are usually manual and are used on ships or in certain installations such as camping sites.

The major disadvantage of the commercially available reverse-osmosis filters is that they tend to remove all the organic components and salts, so that the water output has minimal parts per million, known as ppm, and thus it tastes like deionized water. In order to address this disadvantage, a valve is used which allows manual mixing of the filtrated water with water that has not passed through the filtration steps, and in particular through the reverse-osmosis membrane. In this way, mixed and more tasteful water is obtained. As it is understood, manual mixing has inherent disadvantages, since the user must identify through trial-and-error the proper ratio, so that water with an acceptable taste is obtained. Furthermore, any variation in the composition of the filtrated water affects the water in the user's glass, since there is no way to measure the precise part content in the water and to know whether and to what degree the valve should be adjusted. Finally, it should be noted that two factors that influence the part content in filtrated water is temperature and the water mains pressure. Thus, in case of a variation in the temperature or water mains pressure, the valve, being sensitive, should be readjusted.

Due to the above-mentioned disadvantages and mainly the fact that they are difficult to adjust, reverse osmosis is considered as secondary choice for the production of tap water, despite the large number of available reverse-osmosis filters.

It is an object of the present invention to solve the above-mentioned disadvantages and deficiencies of the prior art by proposing a mixing/stirring system for reverse-osmosis filters.

A further object of the present invention is to provide a mixing/stirring system for reverse-osmosis filters, which is adjusted automatically to ensure a constant ppm value in water.

A further object of the present invention is to provide a mixing/stirring system for reverse-osmosis filters which may be used in any kind of such filters to upgrade its features.

A further object of the invention is to provide a mixing/stirring system for reverse-osmosis filters which achieves intended ppm directly, without excessive consumption of water to achieve the desired adjustment.

A further object of the invention is stirring of the mixed water to achieve uniform distribution of the parts in the whole water quantity.

These and further objects, features and advantages of the invention will be fully apparent by the following description.

### BRIEF DESCRIPTION OF THE FIGURES

The invention will be fully apparent by those skilled in the art with reference to the accompanying figures in which it is depicted in an exemplary, non-limiting way.
Figure 1 shows an exemplary embodiment of the mixing/stirring system for reverse-osmosis filters and its incorporation in such a filter.
Figure 2 shows a board with its components by means of which the system is automatically adjusted and a desired ppm value is achieved

### DETAILED DESCRIPTION OF A PREFERRED EMBODIMENT

Referring now to the accompanying figures, we will describe an exemplary embodiment of the operation as well as the advantages of the mixing/stirring system for reverse-osmosis filters.

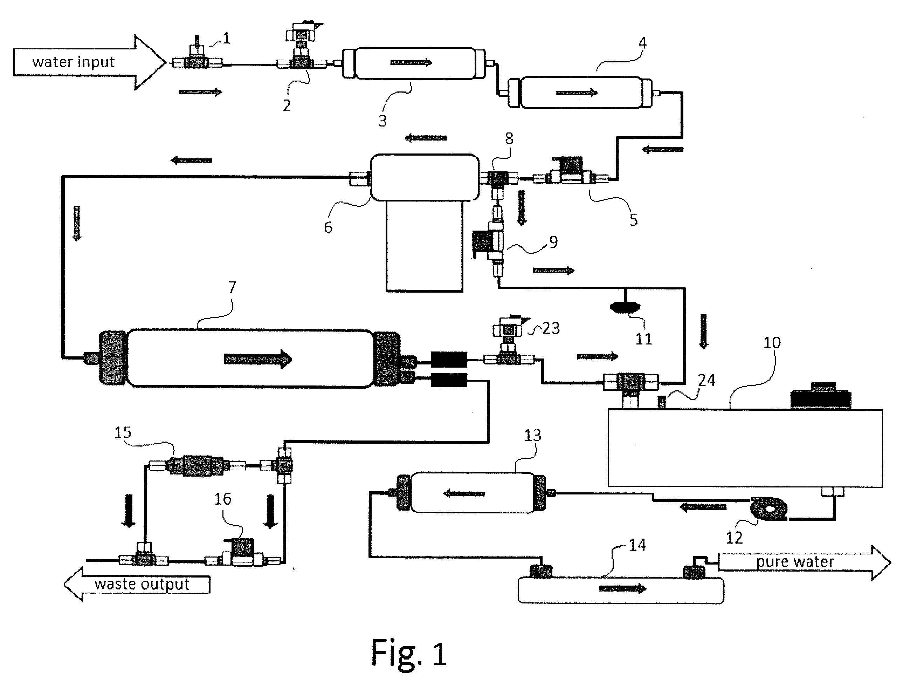

The mixing/stirring system of the present invention may be applied on any reverse-osmosis filter, however for full understanding the description will be given with reference to Fig. 1, which shows a 5-step filter. The system consists of an input sensor (1), Fig. 1, which measures the ppm content in the mains waster. Water passes through a low-pressure controller (2), of the order of 2 bar, which activates the filter and initiates the procedure. In the first step, the water passes through the sediment pre-filter (3), having exemplarily a diameter of 5 µm, where particles and sediments are retained. Thereafter, the water passes through a carbon pre-filter (4), which is connected in series to the sediment pre-filter (3), and which is used for chlorine retention. The specific step is considered significant for a reverse-osmosis filter, since chlorine can destroy the reverse-osmosis membrane of the filter. The carbon pre-filter (4) may be partitioned to 2 parts, where the first part consists of a carbon block and the second part consists of carbon granules which contribute in the further effective retention of chlorine, reducing the concentration to significantly low levels. The said pre-filters may be present as structural units in a reverse-osmosis filter, however this is not necessary for the proper operation of the mixing/stirring system of the present invention.

The supplied water, whether having passed through the pre-filters or not, is guided to the electromagnetic input valve (5) and the pump (6), which in combination with the low-pressure controller (2) determined if the system will be activated or not. When the pump (6) is switched on, the water is guided to the reverse-osmosis membrane (7), where under a high pressure it passes through it, ensuring the necessary conditions for the removal of all the particulate matter from the water. In case that the reverse-osmosis membrane (7) is ruptured, a high-pressure controller (23) is signaled by the operation unit (11) to interrupt the operation of the whole system, ensuring that no unfiltrated water will enter the pure water tank (10). Between the electromagnetic input valve (5) and the pump (6), an electromagnetic bypass valve (9) is interposed by using a T-connection (8), the valve being activated by a signal from the operation unit (11), guiding water that has not passed through the reverse-osmosis membrane (7), maintaining the organic components and salts, directly to the pure water tank (10). In this way, in the pure water tank (10), water that has passed through the reverse-osmosis membrane (7) and is free from organic components and water that has simply passed through the purification pre-filters and retains its organic components are combined. The operation unit (11) is the one that determines the necessary quantities so that during measurement by an output sensor (24) the user-selected ppm value is achieved.

The water that passes through the reverse-osmosis membrane (7) is guided into the pure-water tank (10), which is effected by a pump (6), in order to generate pressure and to stir the water, so that the organic particles are distributed homogeneously in the water, ensuring the same taste in all the quantity. At the output of the pure water tank (10), there is a low-pressure pump (12), which guides the water to the last T33 carbon filter (13) and then to a UV sterilization lamp (14) present in our filtration device. The presence of the T33 carbon filter (13) and the UV sterilization lamp (14), if they are not components of the mixing/stirring system, is recommended to ensure that the water that has remained in the pure water tank (10) for some time can be consumed without any danger, since by their operation any microorganisms or bacteria that may have grown therein can be eliminated. Essentially, by means of a mixing/stirring system for reverse-osmosis filters combined with a filter having the above components and device, filtrated and distilled water is provided at the output which has a ppm value adjusted as desired by the user.

It should be further noted that at the water discharge output of the reverse-osmosis membrane (7), a water flow reducer (15) is arranged, by means of which the optimal operation of the membrane is achieved, ensuring an effective and complete filtration thereof. The discharge water with the other residues are guided through piping to the waste output.

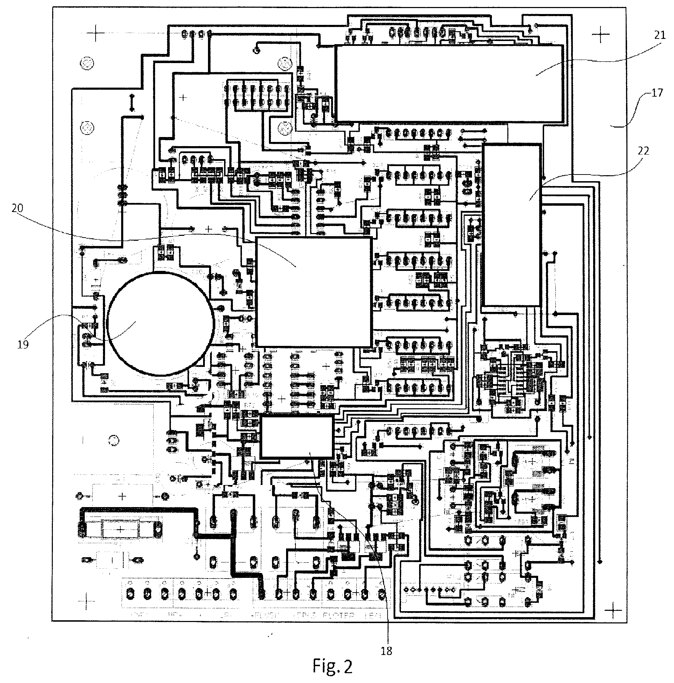

The mixing/stirring system for reverse-osmosis filters has a board (17), Fig. 2, with integrated circuits which are used for the adjustment of the ppm value, as well as for the communication with the system. Thus, an integrated voice circuit (18) is present which communicates with a loudspeaker (19) of the board (17) and which informs the user by audio for the commands or operations selected. A separate integrated circuit (20) is used for the reception of the voice commands by the user while an integrated interface (21) undertakes the serial communication with the system display. Finally, the processing of the ppm values both at the input and at the output of the system, as well as the stirring and operation of the operation unit (11) is performed by a respective by-pass integrated circuit (22).

It should be noted that the description of the invention was made with reference to an exemplary non-limiting embodiment. Thus, any variation or modification as regards the shape, dimensions, morphology, construction and assemblying materials and components employed, as long as not contributing to the technical advance of the already known are considered as encompassed in the scope of the present invention.

## Claims

1. A mixing/stirring system for reverse-osmosis filters, which consists of an input sensor (1), an output sensor (24), an electromagnetic bypass valve (9), an operation unit (11) with a board (17), which includes an integrated bypass circuit (22), an integrated voice circuit (18) and an integrated voice command reception circuit (20), **characterized in that** the input sensor (1) measures the organic particles in the supply water, the user determines the desirable organic particles in the water by voice commands in the integrated voice command reception circuit (20), the electromagnetic bypass valve (9) is activated or deactivated by signals that it receives from the integrated bypass circuit (22) of the operation unit (11), allowing water not subjected to reverse osmosis to enter -or respectively preventing from entering- a pure-water tank (10), so that the organic particles measured by the output sensor (24) are as preselected by the user.
